# EUROPEAN PATENT SPECIFICATION

(11) **EP 3 763 261 B1**
(45) Date of publication and mention of the grant of the patent: **16.08.2023**
(21) Application number: 20184867.8
(22) Date of filing: 09.07.2020
(51) Int. Cl.: A47K 13/12, E05D 11/08

(54) **A CUSHIONED AND DURABLE COUPLING HINGE FOR A TOILET**
EIN LANGLEBIGES KISSENKUPPLUNGSSCHARNIER FÜR EINE TOILETTE
UNE CHARNIÈRE D'ACCOUPLEMENT AMORTIE ET DURABLE POUR UNE TOILETTE

(30) Priority: 12.07.2019 IT 201900011661
(43) Date of publication of application: 13.01.2021
(73) Proprietor: Cominotti S.r.l., 25071 Agnosine Brescia (IT)
(72) Inventor: COMINOTTI, Michele, 25071 Agnosine Brescia (IT); DONATI, Antonio Arduino, 25071 Agnosine Brescia (IT)
(74) Representative: Gualeni, Nadia

(56) References cited:
- EP-A1- 3 017 131
- EP-B1- 3 017 131
- WO-A1-2018/055476

## Description

The present invention relates to a cushioned coupling hinge for a seat and cover of a toilet.

Coupling hinges are used in the sanitary field for hinging the seat (or ring) and related cover for closing the bowl of a toilet. Such hinges allow the seat/cover to rotate relative to the bowl, from a horizontal closing position, resting on the edge of the bowl, to a substantially vertical opening position, in which the seat/cover is open by about 90 degrees and usually resting against the wall supporting the toilet. To prevent the seat/cover from falling back onto the bowl after slight movements, with the risk of damaging the ceramic or being damaged, the use of cushioned hinges is known, which cushion the falling motion of the seat/cover, accompanying it during the lowering until it is resting on the edge of the bowl.

Hinges, which use viscous liquids arranged inside special chambers in order to obtain the cushioning effect are now considered obsolete. In fact, such solutions are complex and costly to manufacture, besides being cumbersome and of a considerable size.

Hinges, which use an elastic element made of rubber, which is gradually pressed between a tooth and a fin inside a special chamber to obtain the cushioning effect, are much more effective. One example of such a known hinge is given by patent EP3017131B1. However, such a type of hinge has a number of drawbacks. In fact, when the cover is completely closed, the elastic element made of rubber is constantly pressed between the tooth and fin: in time, such a state of continuous compression compromises the rubber, in particular, the capacity thereof to expand, and therefore the cushioning system. Instead, when the cover is completely open (just over 90°), the tooth abuts against the fin and the cover can rotate no further in the opening direction: each further thrust in the opening direction risks breaking the tooth or fin, and therefore, the cushioning system.

It is an object of the present invention to overcome the problems of the prior art taking into account the field needs.

In particular, it is an object of the present invention to provide a coupling hinge, which has a particularly effective cushioning action and is durable in time.

Such an object is achieved by a cushioned coupling hinge obtained according to claim 1. The dependent claims describe preferred or advantageous embodiments of the hinge.

The features and advantages of the cushioned coupling hinge according to the present invention will become apparent from the following description given below by way of a non-limiting example according to the accompanying drawings, in which:
- figure 1 shows an axonometric view of a coupling hinge according to the present invention, applied to a seat and to a cover of a toilet;
- figure 2 shows an exploded view of a coupling hinge according to the present invention;
- figures 3A and 3B show the coupling hinge according to the present invention, partially assembled, in which the cushioning mechanism is applied to the cover and seat respectively;
- figure 4 shows a section of the cushioning mechanism of the hinge according to the present invention.

With reference to the attached figures, a cushioned coupling hinge for a seat and cover of a toilet is globally denoted with 1.

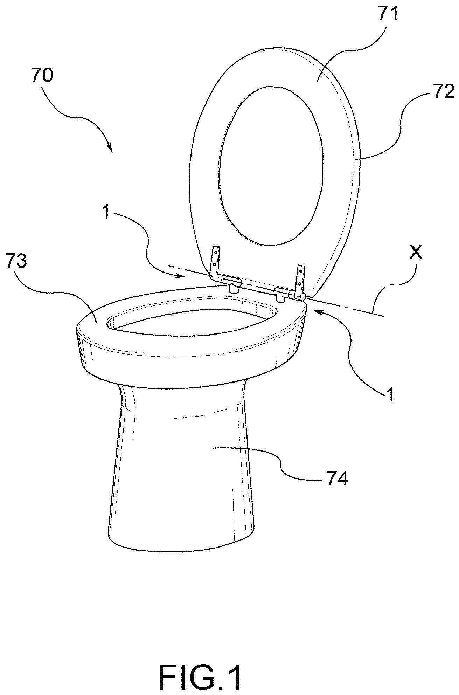

Figure 1 shows the application of a pair of hinges 1 to a toilet 70 provided with a seat 71 (or ring), cover 72 and bowl 74. Each hinge 1 hinges the seat 71 and the related cover 72 to the bowl 74. Being provided with a cushioning mechanism, the hinge 1 cushions the lowering motion of the seat 71 or the cover 72, accompanying it during the rotation about the rotation axis X, during the lowering from a substantially vertical opening position to a substantially horizontal closing position, resting on the edge 73 of the bowl 74.

The term "seat" is understood to mean the annular portion, which is employed to use the toilet in a sitting position; the term "cover" is understood to mean the element, which can be superimposed on the seat, suitable for closing the toilet.

The term "movable component" is understood to mean a component adapted to rotate about a rotation axis X, in particular a seat 71 or a cover 72 of a toilet 70.

The term "fixed component" is understood to mean, in particular, a bowl 74 of a toilet 70.

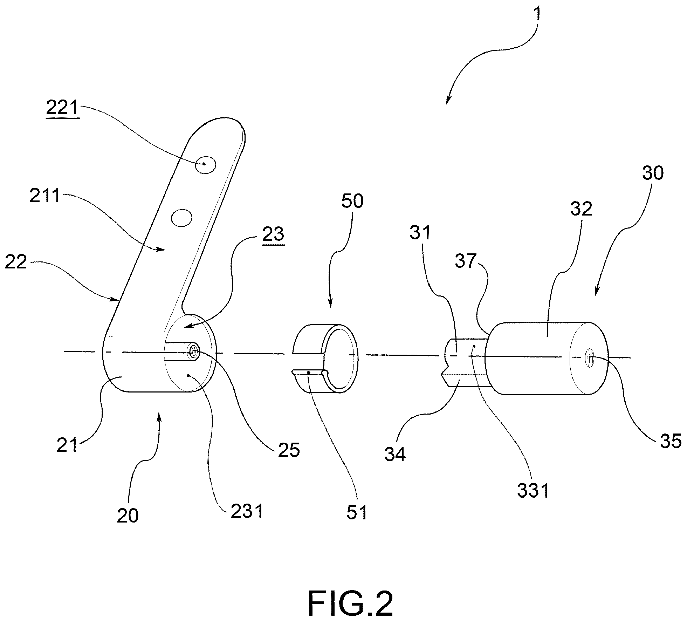

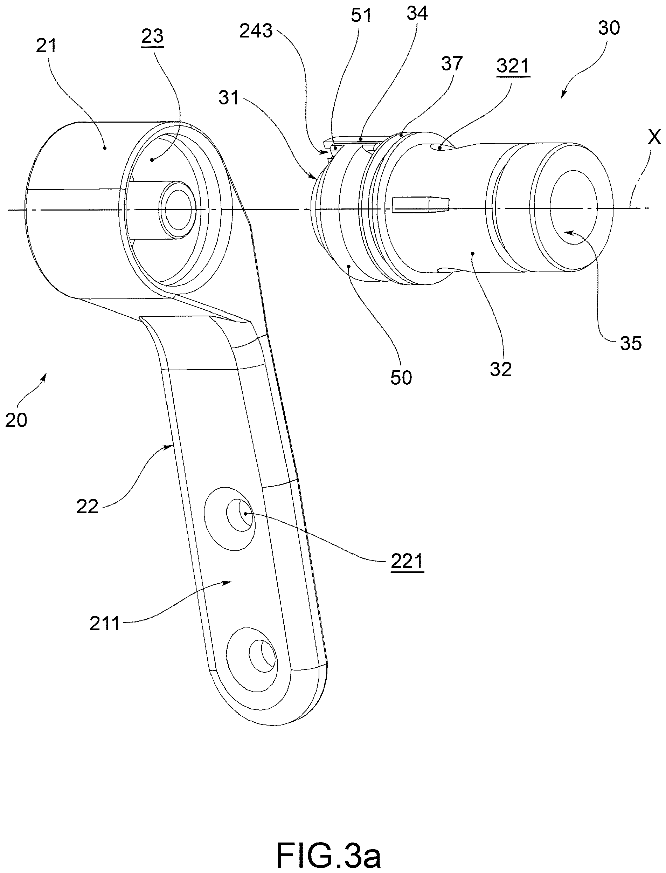

As shown in figure 2 and 3A, the hinge 1 comprises:
- a first element 20, adapted to be rotationally constrained integrally with a movable component to be cushioned, so as to rotate therewith relative to a rotation axis X, or a fixed component;
- a second element 30, adapted to be integrally constrained with a fixed component, or adapted to be rotationally integrally constrained with a movable component to be cushioned, so as to rotate therewith relative to a rotation axis X,
- an elastic element 50, interposed between the first element 20 and the second element 30.

The first element 20 comprises a body 21, preferably cylinder shaped, provided with a chamber 23, preferably cylinder shaped, which is adapted to house therein the elastic element 50 and, at least partially, the second element 30. Preferably, both the body 21 and the chamber 23 develop longitudinally along the rotation axis X.

The body 21 is provided with an inner circular wall 231, which defines, together with a bottom wall, the inside of the chamber 23. Such an inner circular wall 231 is free, i.e. devoid of protuberances or protruding elements in the direction of the rotation axis X. Preferably, the inner circular wall 231 is provided with a smooth surface, to prevent an excessive wear of the elastic element 50. Advantageously, the inner circular wall 231 being free, there are no stops to the rotation of the first element 20, which can be completely open (also over 90°), without there being breakages of internal braking elements or parts.

The body 21 further comprises a seat 25, provided with an inner lumen 251, preferably threaded, adapted to house a fixing element, for example, a screw. The seat 25 is a cylindrical element protruding from the bottom 232 of the chamber 23, coaxial to the body 21 and to the chamber 23.

In one embodiment variant, the first element 20 comprises a fixing portion 22, adapted to be fixed to a movable component or to a movable component.

In the variant shown in figures 2 and 3A, the fixing portion 22 is a lever 211, which extends from the outer wall towards the outside of the body 21, radially relative to the rotation axis X. Preferably, the fixing portion 22 is provided with at least one hole 221 for housing a fixing element to obtain the coupling of the first element 20 with a movable component.

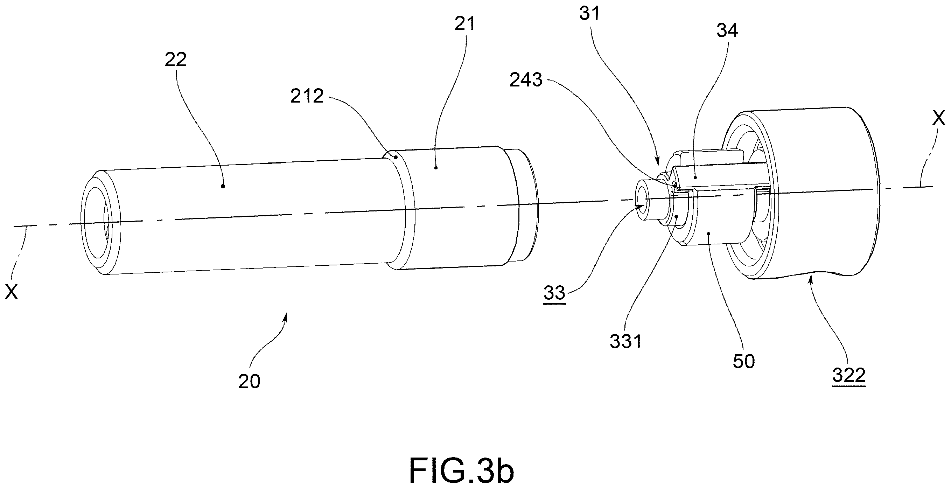

In the variant shown in figure 3B, the fixing portion 22 is an insert, which extends from the bottom 212 of the body 21, longitudinally relative to the rotation axis X. Preferably, the fixing portion 22 makes a shape coupling between the first element 20 and the movable component. In particular, the fixing portion 22 is adapted to be inserted inside a special seat (not shown) provided in the movable component, the seat having the same shape as the fixing portion 22 to obtain a shape coupling therewith. In the variant in figure 3B, the first element 20 can be inserted simultaneously both in a special seat provided in the seat 71 and in a special seat provided in the cover 72.

The second element 30 comprises a body 31, preferably a cylinder-shaped body, adapted to be inserted, at least partially, inside the chamber 23 of the first element 20. The body 31 is provided with a fin 34, protruding from the outer circular wall 331, towards the outside of the body 31. The body 31 further comprises a bottom 37.

As shown in figure 3B, the second element 30 is provided with an inner lumen 33 adapted to house a fixing element. Preferably, both the body 31 and the inner lumen 33 develop longitudinally along the rotation axis X.

In one embodiment variant, shown in figure 2 and 3A, the second element 30 comprises a fixing portion 32 adapted to be fixed to a fixed component or to a movable component. The fixing portion 32 extends from the bottom 37 of the body 31, longitudinally along the rotation axis X. Preferably, the fixing portion 32 has an outer diameter, which is greater than the body 31.

The fixing portion 32 is also provided with an inner lumen 35, adapted to allow a fixing element to pass. The inner lumen 35 extends longitudinally along the rotation axis X, as a continuation of the inner lumen 33. Preferably, the inner lumen 35 has a diameter, which is greater than the inner lumen 33.

In the variant shown in figure 3A, the fixing portion 32 is substantially cylinder shaped and it is provided with a hole 321 for housing a fixing element to obtain the coupling of the second element 30 with a fixed component. The hole 321 passes through the entire fixing portion 32, in a substantially orthogonal direction to the rotation axis X.

In the variant shown in figure 3B, the fixing portion 32 is provided with a blind hole 322, in a substantially orthogonal direction to the rotation axis X, in which a pin can be inserted, integral with a fixed component, to obtain a shape coupling between the second element 30 and the fixed component.

The elastic element 50 is made of a resilient material, preferably rubber. The elastic element 50 is made, for example, of polyurethane. Preferably, the elastic element 50 has a hardness of between Shore 75 and 90.

Preferably, the elastic element 50 is a strip of resilient material having a substantially C shape.

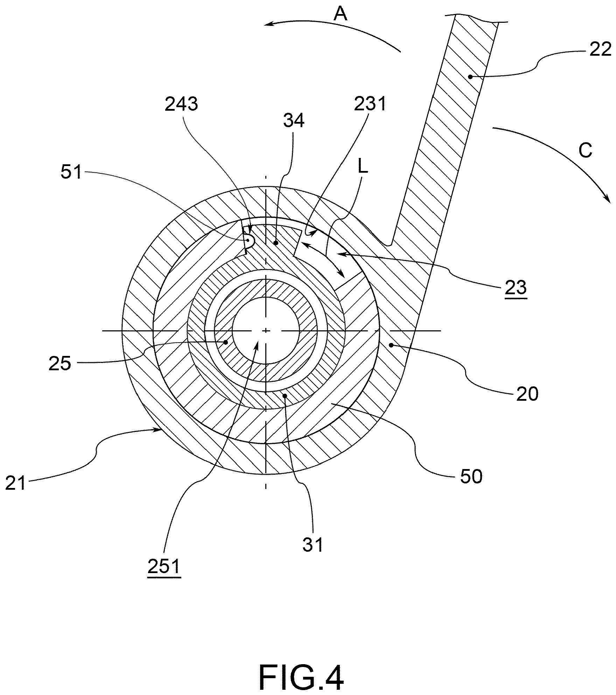

The elastic element 50 has a length (measurable as an arc of a circle), which is smaller than the free inner circumference of the chamber 23. The free inner circumference of the chamber 23 is defined as the circumference of the chamber 23 net of the portion occupied by the fin 35. Therefore, once the elastic element 50 and the body 31 of the second element 30 have been inserted inside the chamber 23 of the first element 20, the chamber 23 is not completely occupied because a portion L of inner circumference still remains free (as shown in figure 4).

The elastic element 50 has a width (measurable longitudinally relative to the rotation axis X), which is smaller than the width of the chamber 23.

For example, in the case of the hinge being designed to cushion the closing of the cover, if the width of the chamber 23 is 15mm, the width of the elastic element 50 is between 7mm and 13mm.

For example, in the case of the hinge being designed to cushion the closing of the ring, if the width of the chamber 23 is 13mm, the width of the elastic element 50 is between 6mm and 10mm.

The elastic element 50 has a thickness (measurable radially relative to the rotation axis X), which is equal to, or smaller than the width of the chamber 23.

Preferably, the elastic element 50 is fixed to the first element 20. In particular, one end 51 of the elastic element 50 is fixed to the fin 34 of the second element 30, so as to be pulled to rotate about the axis X. Preferably, the elastic element 50 is fixed by means of interlocking, for example, the end 51 can be inserted into a special groove 243 provided on the fin 34, or by means of gluing. Once fixed, as is apparent in figure 4, the elastic element 50 cannot be pulled by the rotatable element (first element 20) during the rotation in the opening direction A.

During the assembly of the hinge 1, in order to assemble the cushioning mechanism, the elastic element 50 is fitted onto the body 31 of the second element 30 and the end 51 is inserted into the groove 243 provided on the fin 34. Successively, the elastic element 50 and the body 31 are inserted into the chamber 23 of the first element 20. As can be seen in figure 4, a free space L remains between a second end 51 of the elastic element 50 and the fin 34 of the second element 30.

The fixing of the cushioning mechanism is obtained by means of inserting a fixing element, for example, a screw, through the inner lumen 35 and 33 of the second element 30, and the screwing, into the threaded inner lumen 251, of the first element 20. Successively, the second element 30 and the first element 20 are fixed to the respective fixed and movable components.

Figure 4 shows the first element 20 in an initial configuration, before closing the cover or seat. By rotating the seat 71 or the cover 72 in a closing direction (C), the elastic element 50 (in contact against the surface of the inner circular wall 231) is pulled to rotate by the first element 20 and it is immediately pushed to press against the fin 34 of the body 31, immediately exercising the cushioning function thereof, expanding into the chamber 231. Continuing the rotation, the elastic element 50 continues to be pulled by the first element 20 and pushed to press against the fin 34 of the body 31 to exercise the braking function thereof, expanding into the chamber 231. When the point of maximum compression is reached, the elastic element 50 (not being constrained by any tooth protruding from the first element 20), begins to slip against the surface of the inner circular wall 231 continuing to exercise the function thereof, by expansion into the chamber 231, without being over-compressed. Therefore, the braking effect is constant for all of the lowering and inclining steps of the ring/cover.

Advantageously, the inner circular wall 231 of the chamber 23 of the first element 20 being completely free, i.e. devoid of inner protruding or braking elements, also in a final work configuration, in which the ring/cover is completely lowered onto the ceramic, the elastic element 50 is never over-compressed, a portion L of the inner circumference still remaining free. Never being over-compressed, the elastic element 50 isn't excessively stressed, with a consequent greater duration of the rubber, which is able to make at least 60,000 braking strokes before breaking.

The cushioning mechanism according to the present invention is simple and not particularly cumbersome: in fact, all of the essential elements of the mechanism are housed inside the chamber provided in the first element, without needing large housing spaces.

Furthermore, the cushioning mechanism, thus obtained, acts on the movement of the hinge only during the step of closing the seat/cover, without interfering with the lifting of the seat/cover.

Innovatively, the cushioned coupling hinge according to the present invention has a particularly effective cushioning action and is durable in time.

Advantageously, the cushioned coupling hinge according to the present invention maintains a constant cushioning effect during the step of closing the ring/cover.

Advantageously, with a cushioned coupling hinge according to the present invention, instead, the ring/cover can be completely open (also more than 90°), without the risk of breaking.

Advantageously, the cushioned coupling hinge according to the present invention is particularly easy to manufacture with an effective cushioning action.

Advantageously, the cushioned coupling hinge according to the present invention is highly compact and allows all of the essential elements of the cushioning mechanism to be housed inside a standard-sized hinge.

It is apparent that those skilled in the art can make changes to the device described above, all of which are contained in the scope of protection as defined by the following claims.

## Claims

1. Cushioned coupling hinge (1) for hinging a seat or a cover to a bowl of a toilet, suitable to couple rotatably a movable component and a fixed component,
wherein the movable component is the seat or the cover and the fixed component is the bowl of a toilet, said cushioned coupling hinge (1) comprising:
- a first element (20) and a second element (30), wherein the first element (20) may be joined integrally to the movable component to be cushioned so as to rotate therewith around an axis of rotation (X), and the second element (30) may be joined to the fixed component;
wherein:
- the first element (20) comprises a body (21) equipped with a chamber (23) adapted to house, at least partially, the second element (30), said chamber having an inner circular wall (231);
- the second element (30) comprises a body (31), adapted to be inserted, at least partially, into the chamber (23), and equipped with a fin (34) protruding outwards;
and
further comprising an elastic element (50), interposed between the first element (20) and the second element (30) housed in the chamber (23) and adapted to slow down the rotation of the first element (20) acting during the closure of the movable component and without interfering with the opening of the movable component,
**characterized in that** the inner circular wall (231) is devoid of protruding elements in the direction of the axis of rotation (X),
and **in that** when rotating the seat or the cover in a closing direction (C), the elastic element (50) is pulled by the first element (20) by friction against the inner circular wall (231) to press against the fin (34) of the second element (30) so as to expand against the inner circular wall (231) of the chamber (23) slowing down the rotation of the first element (20) without being over-compressed, a portion of the inner circumference (L) always remaining free.

2. Cushioned coupling hinge (1), according to claim 1, wherein the elastic element (50), when the point of maximum compression is reached, slips against the surface of the inner circular wall (231) continuing to exercise its function, by expansion into the chamber (231), without being over-compressed.

3. Cushioned coupling hinge (1), according to claim 1 or 2, wherein the braking effect is constant for all steps of lowering the seat or the cover.

4. Cushioned coupling hinge (1), according to any one of the preceding claims, wherein the elastic element (50) has a shorter length than the free inner circumference of the chamber (23), said free internal circumference being defined as the circumference of the chamber (23) net of the portion occupied by the fin (35).

5. Cushioned coupling hinge (1), according to any one of the preceding claims, wherein the inner circular wall (231) is equipped with a smooth surface.

6. Cushioned coupling hinge (1), according to any one of the preceding claims, wherein the elastic element (50) is made of rubber.

7. Cushioned coupling hinge (1), according to claim 6, wherein the elastic element (50) has a hardness of between Shore 75 and 90.

8. Cushioned coupling hinge (1), according to the preceding claims, wherein the elastic element (50) is fixed to the fin (34) of the second element (30) by means of a contoured end (51) inserted into a groove (243) provided in the fin (34).

9. Cushioned coupling hinge (1), according to any one of the preceding claims, wherein the first element (20) comprises an attachment portion (22), adapted to attach to the movable component having the shape of a lever extending from the body (21) and equipped with at least one hole (221) for housing an attachment element, and/or the second element (30) comprises an attachment portion (32), adapted to attach to the fixed component, having an essentially cylindrical shape and equipped with a hole (321) passing in a direction essentially orthogonal to the axis of rotation (X), for housing an attachment element.

10. Cushioned coupling hinge (1), according to any one of claims 1 to 9, wherein the first element (20) comprises an attachment portion (22), adapted to attach to the movable component, having the shape of an insert that extends from the body (21), along the axis of rotation (X), and/or the second element (30) comprises an attachment portion (32), adapted to attach to the fixed component, having the shape of an insert that extends from the body (31), along the axis of rotation (X).

## Patentansprüche

1. Gedämpftes Kopplungsgelenk (1) zur gelenkigen Verbindung eines Sitzes oder eines Deckels mit einer Schüssel einer Toilette, welches dazu geeignet ist, eine bewegbare Komponente und eine fixierte Komponente drehbar zu koppeln,
wobei die bewegbare Komponente der Sitz oder der Deckel ist und die fixierte Komponente die Schüssel einer Toilette ist, wobei das gedämpfte Kopplungsgelenk (1) umfasst:
- ein erstes Element (20) und ein zweites Element (30), wobei das erste Element (20) integral mit der bewegbaren Komponente verbunden sein kann, um gedämpft zu sein, um damit um eine Drehachse (X) zu drehen, und das zweite Element (30) mit der fixierten Komponente verbunden sein kann;
wobei:
- das erste Element (20) einen Körper (21) umfasst, welcher mit einer Kammer (23) ausgestattet ist, welche dazu eingerichtet ist, das zweite Element (30) wenigstens teilweise aufzunehmen, wobei die Kammer eine innere kreisförmige Wand (231) aufweist;
- das zweite Element (30) einen Körper (31) umfasst, welcher dazu eingerichtet ist, wenigstens teilweise in die Kammer (23) eingesetzt zu sein und mit einer Finne (34) ausgestattet ist, welche nach außen vorsteht;
und
ferner umfassend ein elastisches Element (50), welches zwischen dem ersten Element (20) und dem zweiten Element (30) eingefügt ist, welches in der Kammer (23) aufgenommen ist, und dazu eingerichtet ist, die Drehung des ersten Elements (20) zu verlangsamen, während des Verschließens der bewegbaren Komponente wirkend und ohne mit der Öffnung der bewegbaren Komponente einzugreifen,
**dadurch gekennzeichnet, dass** die innere kreisförmige Wand (231) frei von Vorsprungselementen in der Richtung der Drehachse (X) ist,
und dadurch, dass, wenn der Sitz oder der Deckel in einer Schließrichtung (C) gedreht wird, das elastische Element (50) durch das erste Element (20) mittels Reibung gegen die innere kreisförmige Wand (231) gezogen wird, um gegen die Finne (34) des zweiten Elements (30) zu drücken, um sich gegen die innere kreisförmige Wand (231) der Kammer (23) auszudehnen, wodurch die Drehung des ersten Elements (20) verlangsamt wird, ohne überkomprimiert zu werden, wobei ein Abschnitt des inneren Umfangs (L) immer frei bleibt.

2. Gedämpftes Kopplungsgelenk (1) nach Anspruch 1, wobei das elastische Element (50), wenn der Punkt einer maximalen Komprimierung erreicht ist, gegenüber der Fläche der inneren kreisförmigen Wand (231) gleitet, seine Funktion weiter ausübend, durch eine Ausdehnung in die Kammer (231), ohne überkomprimiert zu werden.

3. Gedämpftes Kopplungsgelenk (1) nach Anspruch 1 oder 2, wobei der Bremseffekt für alle Schritte eines Absenkens des Sitzes oder des Deckels konstant ist.

4. Gedämpftes Kopplungsgelenk (1) nach einem der vorhergehenden Ansprüche, wobei das elastische Element (50) eine kürzere Länge als der freie innere Umfang der Kammer (23) aufweist, wobei der freie innere Umfang als der Umfang der Kammer (23) mit Abzug des Abschnitts definiert ist, welcher durch die Finne (35) eingenommen wird.

5. Gedämpftes Kopplungsgelenk (1) nach einem der vorhergehenden Ansprüche, wobei die innere kreisförmige Wand (231) mit einer glatten Fläche ausgestattet ist.

6. Gedämpftes Kopplungsgelenk (1) nach einem der vorhergehenden Ansprüche, wobei das elastische Element (50) aus Kautschuk hergestellt ist.

7. Gedämpftes Kopplungsgelenk (1) nach Anspruch 6, wobei das elastische Element (50) eine Härte von zwischen 75 und 90 Shore aufweist.

8. Gedämpftes Kopplungsgelenk (1) nach den vorhergehenden Ansprüchen, wobei das elastische Element (50) an der Finne (34) des zweiten Elements (30) mittels eines konturierten Endes (51) fixiert ist, welches in eine Nut (243) eingesetzt ist, welche in der Finne (34) bereitgestellt ist.

9. Gedämpftes Kopplungsgelenk (1) nach einem der vorhergehenden Ansprüche, wobei das erste Element (20) einen Anbringungsabschnitt (22) umfasst, welcher dazu eingerichtet ist, an der bewegbaren Komponente angebracht zu werden, die Form eines Hebels aufweist, welcher sich von dem Körper (21) erstreckt, und mit wenigstens einem Loch (221) ausgestattet ist, um ein Anbringungselement aufzunehmen, und/oder das zweite Element (30) einen Anbringungsabschnitt (32) umfasst, welcher dazu eingerichtet ist, an der fixierten Komponente angebracht zu werden, eine im Wesentlichen zylindrische Form aufweist und mit einem Loch (321) ausgestattet ist, welches in einer Richtung verläuft, welche im Wesentlichen orthogonal zu der Drehachse (X) ist, um ein Anbringungselement aufzunehmen.

10. Gedämpftes Kopplungsgelenk (1) nach einem der Ansprüche 1 bis 9, wobei das erste Element (20) einen Anbringungsabschnitt (22) umfasst, welcher dazu eingerichtet ist, an der bewegbaren Komponente angebracht zu werden, die Form eines Einsatzes aufweist, welcher sich von dem Körper (21) erstreckt, entlang der Rotationsachse (X), und/oder das zweite Element (30) einen Anbringungsabschnitt (32) umfasst, welcher dazu eingerichtet ist, an der fixierten Komponente angebracht zu werden und die Form eines Einsatzes aufweist, welcher sich von dem Körper (31) erstreckt, entlang der Drehachse (X).

## Revendications

1. Charnière d'accouplement amortie (1) pour l'articulation d'un siège ou d'un couvercle à une cuvette d'une toilette, apte à coupler, de manière à pouvoir tourner, un composant mobile et un composant fixe,
dans laquelle le composant mobile est le siège ou le couvercle et le composant fixe est la cuvette d'une toilette, ladite charnière d'accouplement amortie (1) comprenant :
- un premier élément (20) et un deuxième élément (30), dans laquelle le premier élément (20) peut être relié d'un seul tenant au composant mobile à amortir afin de tourner avec celui-ci autour d'un axe de rotation (X), et le deuxième élément (30) peut être relié au composant fixe ; dans laquelle :
- le premier élément (20) comprend un corps (21) équipé d'une chambre (23) apte à loger, au moins partiellement, le deuxième élément (30), ladite chambre aant une paroi circulaire intérieure (231) ;
- le deuxième élément (30) comprend un corps (31), apte à être inséré, au moins partiellement, dans la chambre (23), et équipé d'une ailette (34) saillante vers l'extérieur ; et
comprenant en outre un élément élastique (50), interposé entre le premier élément (20) et le deuxième élément (30), logé dans la chambre (23) et apte à ralentir la rotation du premier élément (20) en agissant au cours de la fermeture du composant mobile et sans interférer avec l'ouverture du composant mobile,
**caractérisée en ce que** la paroi circulaire intérieure (231) est dépourvue d'éléments saillants dans la direction de l'axe de rotation (X),
et **en ce que**, lors de la rotation du siège ou du couvercle dans une direction de fermeture (C), l'élément élastique (50) est tiré par le premier élément (20) par frottement contre la paroi circulaire intérieure (231) pour presser contre l'ailette (34) du deuxième élément (30) afin de s'étendre contre la paroi circulaire intérieure (231) de la chambre (23) en ralentissant la rotation du premier élément (20) sans être trop compressé, une partie de la circonférence intérieure (L) restant toujours libre.

2. Charnière d'accouplement amortie (1) selon la revendication 1, dans laquelle l'élément élastique (50), lorsque le point de compression maximale est atteint, glisse contre la surface de la paroi circulaire intérieure (231) en continuant d'exercer sa fonction, en s'étendant dans la chambre (231), sans être trop compressé.

3. Charnière d'accouplement amortie (1) selon la revendication 1 ou 2, dans laquelle l'effet de freinage est constant pour toutes les étapes de l'abaissement du siège ou du couvercle.

4. Charnière d'accouplement amortie (1) selon l'une quelconque des revendications précédentes, dans laquelle l'élément élastique (50) a une longueur plus courte que la circonférence intérieure libre de la chambre (23), ladite circonférence intérieure libre étant définie en tant que la circonférence de la chambre (23) moins la partie occupée par l'ailette (35).

5. Charnière d'accouplement amortie (1) selon l'une quelconque des revendications précédentes, dans laquelle la paroi circulaire intérieure (231) est munie d'une surface lisse.

6. Charnière d'accouplement amortie (1) selon l'une quelconque des revendications précédentes, dans laquelle l'élément élastique (50) est en caoutchouc.

7. Charnière d'accouplement amortie (1) selon la revendication 6, dans laquelle l'élément élastique (50) a une dureté entre Shore 75 et 90.

8. Charnière d'accouplement amortie (1) selon les revendications précédentes, dans laquelle l'élément élastique (50) est fixé à l'ailette (34) du deuxième élément (30) au moyen d'une extrémité profilée (51) insérée dans une rainure (243) prévue dans l'ailette (34).

9. Charnière d'accouplement amortie (1) selon l'une quelconque des revendications précédentes, dans laquelle le premier élément (20) comprend une partie de raccordement (22), apte à se raccorder au composant mobile, ayant la forme d'un levier s'étendant depuis le corps (21) et équipée d'au moins un trou (221) pour loger un élément de raccordement, et/ou le deuxième élément (30) comprend une partie de raccordement (32), apte à se raccorder au composant fixe, ayant une forme sensiblement cylindrique et équipée d'un trou (321) passant dans une direction sensiblement orthogonale à l'axe de rotation (X), pour loger un élément de raccordement.

10. Charnière d'accouplement amortie (1) selon l'une quelconque des revendications 1 à 9, dans laquelle le premier élément (20) comprend une partie de raccordement (22), apte à se raccorder au composant mobile, ayant la forme d'un insert qui s'étend depuis le corps (21), le long de l'axe de rotation (X), et/ou le deuxième élément (30) comprend une partie de raccordement (32), apte à se raccorder au composant fixe, ayant la forme d'un insert qui s'étend depuis le corps (31), le long de l'axe de rotation (X).
